Europäisches Patentamt

European Patent Office

Office européen des brevets

(11) Publication number: **0 137 272 B1**

# EUROPEAN PATENT SPECIFICATION

(45) Date of publication of patent specification: **19.06.91**

(51) Int. Cl.⁵: **G11B 7/09, G11B 7/13**

(21) Application number: **84110194.2**

(22) Date of filing: **28.08.84**

(54) Automatic focusing device.

(30) Priority: **05.09.83 JP 162823/83**
**27.09.83 JP 178486/83**
**13.10.83 JP 191280/83**

(43) Date of publication of application:
**17.04.85 Bulletin 85/16**

(45) Publication of the grant of the patent:
**19.06.91 Bulletin 91/25**

(84) Designated Contracting States:
**DE FR GB**

(56) References cited:
EP-A- 0 070 552      EP-A- 0 075 676
FR-A- 2 339 929      FR-A- 2 356 333
FR-A- 2 390 749      US-A- 4 296 316

PATENT ABSTRACTS OF JAPAN, vol. 7, no.
188 (P-217)[1333], 17th August 1983; & JP-
A-58 88 842 (RICOH K.K.) 27-05-1983

PATENT ABSTRACTS OF JAPAN, vol. 7, no.
278 (P-242)[1423], 10th December 1983; & JP-
A-58 155 535 (RICOH K.K.) 16-09-1983

(73) Proprietor: **MITSUBISHI DENKI KABUSHIKI
KAISHA**
**2-3, Marunouchi 2-chome Chiyoda-ku
Tokyo 100(JP)**

(72) Inventor: **Shikama, Shinsuke c/o MITSUBISHI
DENKI K.K.**
**Consumer Electronics Development Labora-
tory**
**1, Zusho Baba Nagaokakyo-shi Kyoto(JP)**
Inventor: **Kondou, Mitsushige c/o MITSUBISHI
DENKI K.K.**
**Consumer Electronics Development Labora-
tory**
**1, Zusho Baba Nagaokakyo-shi Kyoto(JP)**
Inventor: **Egashira, Nobumasa c/o MIT-
SUBISHI DENKI K.K.**
**Consumer Electronics Develoment Labora-
tory**
**1, Zusho Baba Nagaokakyo-shi Kyoto(JP)**
Inventor: **Okada, Kazuo c/o MITSUBISHI DENKI
K.K.**
**Consumer Electronics Development Labora-
tory**
**1, Zusho Baba Nagaokakyo-shi Kyoto(JP)**

PATENT ABSTRACTS OF JAPAN, vol. 8, no. 159 (P-289)[1596], 24th July 1984; & JP-A-59 56 230 (TOKYO SHIBAURA DENKI K.K.) 31-03-1984

(74) Representative: **Eisenführ, Speiser & Strasse**
Martinistrasse 24
W-2800 Bremen 1(DE)

## Description

The invention relates to an automatic focusing device comprising an objective lens for focusing a light beam emitted by a light source on a track of an information recording medium; a beam splitter for separating a reflected light beam reflected by the information recording medium at a focal spot thereon and through the objective lens from the light beam emitted by the light source; an astigmatic optical system including an optical element capable of causing astigmatic aberration of the separated reflected light beam; a light detector having a central light receiving section for information reading and a side light receiving surface adjacent to the central section and divided into a plurality of light receiving sections which are arranged symmetrically with respect to a first axis (X) extending in parallel to the axial direction of the optical element and to a second axis (Y) extending perpendicularly to the first axis (X) and adapted to receive the reflected beam transmitted through the optical element and to give a light reception output signal corresponding to the shape of the spot of the reflected light beam formed on the light receiving surface; a focal position detecting circuit capable of giving an output signal corresponding to the displacement of the objective lens from the focused position, on the basis of the output signal given by the light detector; and a lens driving circuit which drives the objective lens along the optical axis on the basis of the output signal given by the focal position detecting circuit.

Such an automatic focusing device is known from JP-A-58 88 842 (patent abstracts of Japan, volume 7, number 188, (P-217), 17 August 1983).

Recently, active development of optical video disk devices and optical audio disks for reproducing information recorded optically in information recording disks or for recording information in information recording disks by the use of a head using laser light has been made. The head of such an optical disk device (referred to as "optical disk head" hereinafter) is designed to focus a condensed laser light beam correctly on the information recording track of a disk serving as an information recording medium. Accordingly, the optical disk head needs to be equipped with an automatic focusing device. There is a known system employing an astigmatic optical system for information detection and for focal position detection.

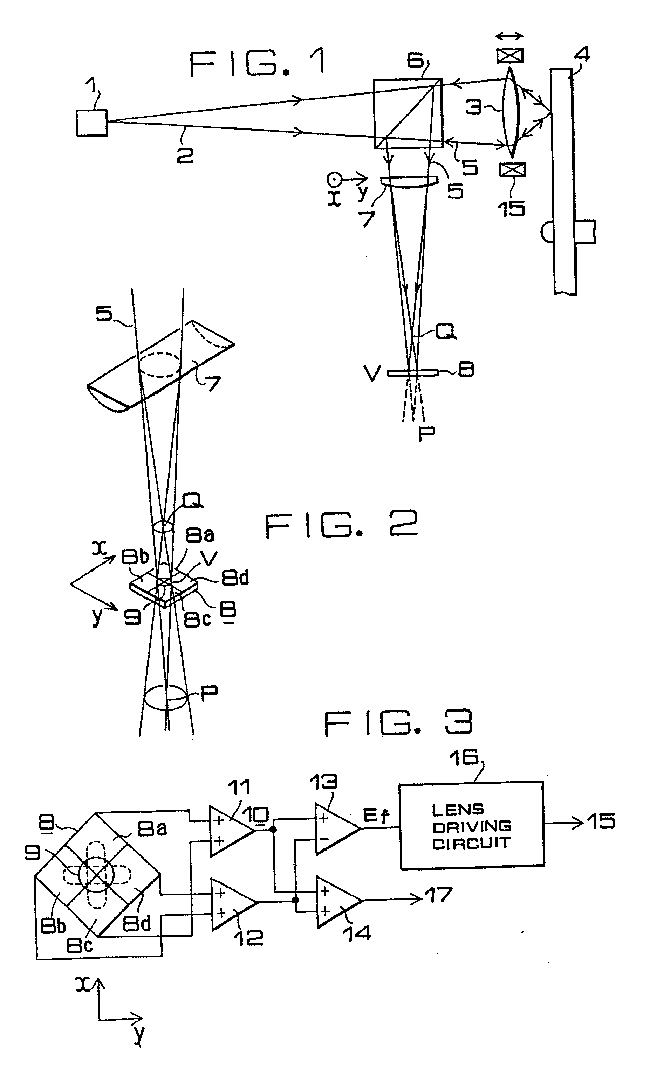

Fig. 1 is a schematic light passage diagram of a known automatic focusing device of an optical disk head employing an astigmatic optical system, Fig. 2 is a perspective view of part of the light passage of Fig. 1 and Fig. 3 is a circuit diagram of a servo mechanism including a light detector and the following circuits. Referring to Figs. 1, 2 and 3, there are shown a light source 1 such as a semiconductor laser, a light beam 2 emitted by the light source 1, an objective lens 3, an optical disk 4 serving as an information recording medium, storing digital audio signals or video signals in tracks and placed in the vicinity of the focal point of the objective lens, a reflected light beam 5 reflected from a focal spot on the disk 4 and transmitted through the objective lens 3, a beam splitter 6 for separating the radiated light beam 2 and the reflected light beam 5, a cylindrical lens 7 serving as an optical element for causing the astigmatic aberration of the reflected light beam 5 and having a longitudinal axis x extending perpendicularly to the surface of the sheet and an axis y extending perpendicularly to the axis x. One of the axes x and y is arranged substantially in the track direction on the disk. A light detector 8 is divided into four sections 8a, 8b, 8c and 8d by division lines extending at an angle of 45° with respect to the x-direction and y-direction respectively, a reflection beam spot 9 formed in the light detector 8 by the reflected light beam 5, a focal point detecting circuit 10 consisting of adders 11 and 12 and a differential amplifier 13, an information detecting circuit 14 formed of an adder, a focus actuator 15 for moving the objective lens along the optical axis, a lens driving circuit 16 which energizes the focus actuator 15 to drive the objective lens, and a connection 17 to an information reproducing circuit, not shown.

The functions of the automatic focusing device will be described hereinafter. A laser beam 2 emitted by the light source 1 is focused by the objective lens 3 and forms a light spot on a track of the disk 4. The disk 4 has an irregular surface formed of minute pits. Information is formed in the form of those pits. As the disk 4 is rotated, the laser beam radiated on the surface of the disk 4 is modulated by the pits and is reflected.

The reflected light beam 5 is separated from the laser beam 2 by the beam splitter 6 and is converted into an astigmatic beam which is converged in a single direction, by the cylindrical lens 7. The cylindrical lens 7 does not have the function of lens in the x-direction, therefore, the reflected beam is focused on a point P by the objective lens 3, while in the y-direction, the reflected beam is focused on a point Q by the focusing function of the cylindrical lens 7. Accordingly, the form of light distribution of the astigmatic reflected beam at the point Q, at the point P and at an intermediate point V between the points P and Q is an ellipse elongated in the x-direction, an ellipse elongated in the y-direction and an ellipse elongated either in the x-direction or in the y-direction or a circle, respectively.

The four-section light detector 8 is located at a position where the form of the light distribution of the astigmatic reflected beam is a circle, namely, the intermediate position V, when the disk 4 is positioned at a position corresponding to the focal point of the objective lens 3 (this position will be referred to as "focused position" hereinafter). Accordingly, the form of the spot 9 of the reflected beam on the light detector 8 is a circle when the disk 4 is at the focused position, an ellipse elongated in the x-direction when the disk 4 is at a position displaced toward the objective lens 3 from the focused position and an ellipse elongated in the y-direction when the disk 4 is displaced from the focused position away from the objective lens 3.

When the spot 9 of the reflected beam is circular, the light receiving sections 8a, 8b, 8c and 8d receive light equally. When the spot 9 of the reflected light is an ellipse elongated in the x-direction, the light receiving sections 8a and 8c receives more light than the rest of the light receiving sections. When the spot 9 of the reflected beam is an ellipse elongated in the y-direction, the light receiving sections 8b and 8d receives more light than the rest of the light receiving sections.

Accordingly, the output signal of the differential amplifier 13, i.e., the output signal $E_f$ of the focal position detecting circuit 10, corresponding to the difference between the output signal given by the adder 11 corresponding to the sum of the light reception outputs of the light receiving sections 8a and 8c and the output signal given by the adder 12 corresponding to the sum of the light reception outputs of the light receiving sections 8b and 8d is zero when the disk 4 is at the focused position, a positive value when the objective lens 3 is moved toward the optical disk 4 from the focused position and the spot 9 of the reflected beam is an ellipse elongated in the x-direction, and a negative value when the objective lens 3 is moved from the focused position away from the optical disk 4 and the spot 9 is an ellipse elongated in the y-direction. The magnitude of the output signal of the focal position detecting circuit is approximately proportional to the deviation of the objective lens 3 from the focused position. Accordingly, the objective lens 3 is focused automatically by energizing the focus actuator 15 through the control of the lens driving circuit 16 by the output signal $E_f$ of the focal position detecting circuit 10 to move the objective lense 3 along the optical axis.

The information read out from the optical disk 5 and carried by the reflected beam 5 is taken out by an information detecting circuit 14 which receives the sum of the light reception output signals of the light receiving sections.

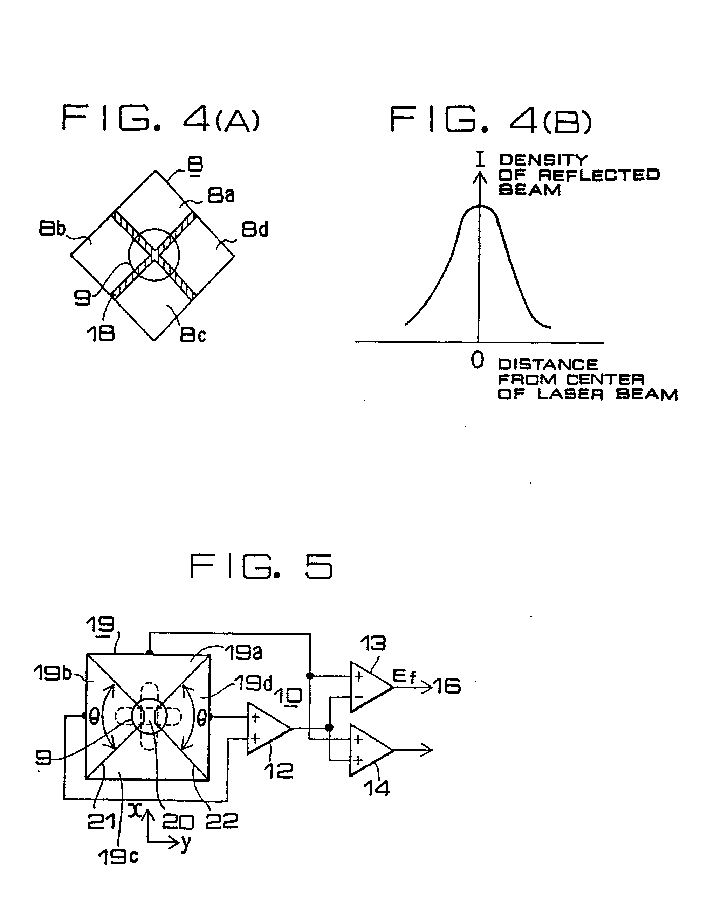

However, the conventional automatic focusing device as described hereinbefore has the following problems in its practical use. As shown more specifically in Fig. 4A showing the detail of the constitution of the four-section light detectors 8 of Fig. 3, there is a blind zone 18 of a finite width between the light receiving sections 8a, 8b, 8c and 8d to separate those light receiving sections from each other. If the width of this blind zone 18 is too narrow, cross talk between those light receiving sections increases and the output signal corresponding to the calculated difference is reduced adversely. According to exemplary design data of the conventional automatic focusing device, the diameter of the spot 9 when the objective lens is at the focused position is about 100 $\mu$m and the lower limit of the width of the blind zone is approximately 10 to 15 $\mu$m. Furthermore, the energy of a portion of the flux of the incident light on the light detector 8 that falls on the blind zone 18 does not contribute at all neither to the output of the focal position detecting circuit 10 nor to the output of the information detecting circuit 14.

On the other hand, since the reflected beam 5 is a Gaussian beam as shown in Fig. 4B and the center O of the reflected beam 5, where the flux density of the reflected beam 5 is the highest, coincides with the central portion of the light detector 8 where the blind zone is extending, the focused state detecting sensitivity is relatively low as compared with the sensitivity of detection in an ideal condition where the width of the blind zone is zero and cross talk does not occur. Still further, the loss of the incident energy due to the presence of the blind zone causes the reduction in the output of the information detecting circuit 14, which entails the deterioration of the SN ratio.

As described earlier, the output $E_f$ of the differential amplifier 13 is zero when the objective lens is focused, which, however, does not mean that the intensity of the incident light on the light detector 8 is zero. The output $E_f$ becomes zero merely because the sum of the incident light fluxes on the light receiving sections 8a and 8c and the sum of the incident light fluxes on the light receiving sections 8b and 8d are balanced. If the distribution of the incident light flux on the light detector 8 is changed by some cause, the balance is destroyed and the differential amplifier 13 gives an output signal as if the objective lens has become out of focus, despite the objective lens being in focus. One of the causes of such destruction of the balance is the variation of the light source 1 in the light emission distribution. When the light source 1 is a semiconductor laser, the variation of the excitation current or the secular deterioration of the semiconductor laser causes the variation of the light emission distribution. As shown in Fig. 4B, the flux distribution forms a conical distribution curve having a single peak at the center where the flux density is the highest and, since the center of the four-section light detector coincides with the center of the reflected beam, even a slight variation in the flux distribution affects the balance greatly. The pregroove (guide track) of an add-on disk (a disk capable of recording) and refractive light from the recording pit are other factors affecting the balance. The distribution pattern of the diffractive light is not necessarily symmetrical with respect to the optical axis and is subject to the extent of the deviation of the track and whether or not any signal is recorded in the pregroove. Consequently, the form of the spot of the reflected beam which is to be circular when the objective lens is focused is deformed and the offset of a tracking point occurs.

From JP-A-58 88 842 it is known to have a central light receiving section for information reading and a side light receiving surface adjacent to the central section and divided into a plurality of light receiving sections. The central light receiving section uses a special photo detector having a high response and high frequency characteristics as compared with the other areas.

From EP-A-75 676 it is known to use special detection areas for tracking error detection, but it is not used for focusing error detection.

Furthermore, US-A-42 96 316 shows an optical focusing device having one central narrow area and two adjacent larger areas. Such a device, however, has the disadvantage of a non-linear sensing characteristic around the two focusing point, so that it is difficult to provide an appropriate control system.

Finally, from EP-A-70 552 an optical head is known comprising two photosensitive regions and an intermediate, non-photosensitive region there between. This arrangement can also be defined with four photosensitive areas. Such an optical head, however, has the disadvantage that for reading optical information, either a different head has to be used, or the sensitivity is greatly reduced if the focused spot only reaches the edges of the two or four distant photosensitive areas.

Accordingly, it is an object of the present invention to provide a highly reliable automatic focusing device having satisfactory focal position detecting sensitivity.

Based on an automatic focusing device as defined before, one embodiment of the present invention is characterized in that the central light receiving section has a width in the second axis (Y) which is equal or slightly smaller than the diameter of the light spot when focused, and widens up to both sides in the direction of the first axis (X).

Preferable improvements are defined in the dependent claims.

In the drawings:

Figure 1 is a schematic view showing the light passage of an automatic focusing device employing a conventional astigmatic optical system;

Figure 2 is a schematic perspective view of the light passage of the astigmatic optical system of Fig. 1;

Figure 3 is an explanatory circuit diagram of a light detector applied to the astigmatic optical system of Fig. 2;

Figures 4A and 4B are views showing a mode of division of the light detector of Fig. 3 and a diagram showing a characteristic laser flux distribution curve respectively;

Figure 5 is a view showing the constitution and the circuit of a light detector employed in a first embodiment of an automatic focusing device according to the present invention;

Figure 6 is a view showing the constitution and the circuit of a light detector employed in a second embodiment of an automatic focusing device according to the present invention;

Figures 7 to 9 are explanatory views showing patterns of laser beam spots formed on the light detector according to the tracking operation of the automatic focusing device of Fig. 6; and

Figure 10 is an explanatory view showing the constitution and the circuit of a light detector employed in a third embodiment of an automatic focusing device according to the present invention.

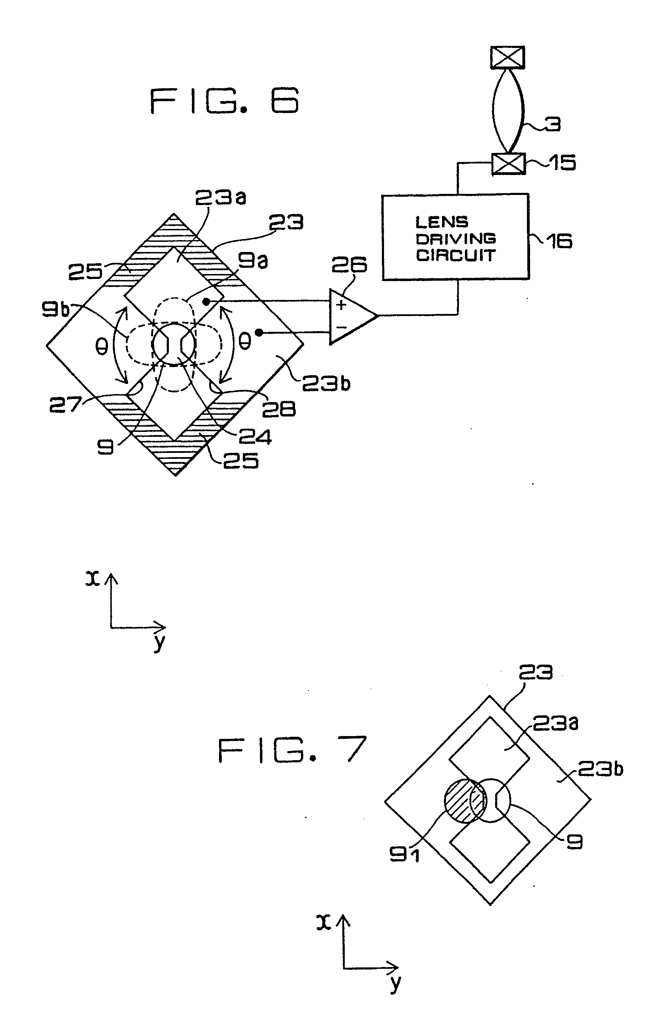

Preferred embodiments of the present invention will be described hereinafter in connection with the accompanying drawings. Figure 5 is a schematic view showing the constitution and the circuit of a light detector employed in the first embodiment of an automatic focusing device according to the present invention. Other parts and the constitution of the automatic focusing device are the same as those of the automatic focusing device of Figs. 1 to 3. Like reference characters designate like or corresponding parts through Figs. 3 and 5. A focal position detecting circuit 10 consists only of an adder 12 and a differential amplifier 13. A light detector 19 is divided, by division lines 21 and 22 which are bent in the central portion of the light detector 19, into three light receiving sections, namely, a central light receiving section 19a, 19c with a constricted central portion and side light receiving sections 19b and 19d which are formed opposite to each other on the opposite sides of the central light receiving section 19a, 19c. The shape of the central light receiving section 19a is axially symmetric with respect to both an axis extending in an x-direction and an axis extending in a y-direction which intersect perpendicularly each other at the center of the light detector 19. The form of each of the side light receiving sections 19b and 19d is axially symmetric with respect to the axis extending in the y-direction.

Basically, the focal position detecting function and the automatic focusing function of the automatic focusing device employing this light detector 19 are the same as those of the conventional automatic focusing device as shown in Figs. 1 to 3.

However the automatic focusing device of the present invention has advantages over the conventional automatic focusing device. In the light detector 8 employed in the conventional automatic focusing device, the light receiving sections 8a and 8c are interconnected by the external adder 11, whereas, in the light detector 19 employed in the automatic focusing device of the present invention, the light receiving section corresponding to the light receiving sections 8a and 8c are interconnected internally by a connecting part 20 to form a single light receiving section 19a, and hence the adder 11 is unnecessary.

Furthermore, in the light detector 19, the connecting part 20 is provided instead of division lines in the central portion of the light detector, where the flux density of the spot of the reflected beam is the highest and the division line affects greatly to the light energy loss, to receive the light flux of the central portion of the light spot efficiently. Therefore, the focus deviation detecting sensitivity is increased. Still further, the effective use of the light flux in the central portion of the light detector enables an information detecting circuit 14 to give a reproduction signal of increased amplitude level, which contributes to the improvement of the SN ratio. The present invention enables, in addition to those improvements, the reduction of components, such as the adder 11, and the improvement of reliability without deteriorating the performance of the automatic focusing device, and thereby the reduction of the manufacturing cost. Furthermore, since the edge angle of the opposed apexes of the side light receiving sections 19b and 19c can be increased, the deterioration of the dielectric strength due to the concentration of electric field on the apexes is prevented.

Fig. 6 shows the constitution and the circuit of a light detector employed in the second embodiment of the present invention, in which the like parts corresponding to those shown in Figs. 1 and 3 are designated by like reference characters and detailed description thereof will be omitted. As shown in Fig. 6, a light detector 23 has a central light receiving section 23a and an outer light receiving section 23b. The shape of the central light receiving section 23a corresponds to the union of the light receiving sections 8a and 8c of Fig. 3. That is, the central light receiving section 23a has a construction corresponding to the connection of the light receiving sections 8a and 8c by a central constricted part 24. The outer light receiving section 23b has a construction corresponding to the connection of the light receiving sections 8b and 8d of Fig. 3 by connecting parts 25, i.e., shaded parts in Fig. 6, and surrounding the constricted part 24.

As shown in Fig. 6, the two-section light detector 23 is approximately symmetric with respect to an axis extending in the x-direction and is disposed so that the central light receiving section 23a is symmetric with respect to two perpendicular axes extending in the x-direction and the y-direction respectively and the central portion thereof coincides with the central portion of the spot of the laser beam. Accordingly, the shape of the spot of the laser beam, i.e., the spot 9 of the reflected light, changes from a shape 9 indicated by solid line to a shape 9a or 9b indicated by broken lines as the optical disk is displaced from the focused position.

The output signals given by the light receiving sections 23a and 23b corresponds to the output signals given by the adders 11 and 12 of Fig. 3. Therefore, the light receiving sections 23a and 23b are connected directly to a differential amplifier 26 and the differential amplifier 26 gives an output signal corresponding to the degree of the deviation of the objective lens from the focused position. Automatic focusing is attained by moving the objective lens 3 toward or away from the optical disk by a lens driving circuit 16 on the basis of the output signal given by the differential amplifier 26.

The two-section light detector 23 of the second embodiment has the central constricted part 24, namely, a part having no division line, and hence the two-section light detector 23 provides the same functional effects as those of the light detector 19 of the first embodiment.

It is a secondary advantage of the second embodiment that the light detector 23 has only two lead wires, whereas the light detector 8 of Fig. 3 has four lead wires and the adders 11 and 12 are omitted, and thereby the number of the components is reduced and the reliability is improved without deteriorating the performance of the automatic focusing device.

Now, a description will be given regarding the most effective disposition and the constitution of the light detector 23 when the second embodiment of the automatic focusing device according to the present invention is applied to a practical optical information reproducing apparatus such as an optical disk player. In an optical information reproducing apparatus, the light spot needs to be moved radially according to the eccentric rotation of the optical disk 4 in order to make the light spot keep track of a single information track all the time.

Generally, such a correction of the position of the light spot is attained by translating the objective lens 3 radially. Such a radial movement of the light spot according to the eccentric rotation of the optical disk is designated as "tracking".

As shown in Fig. 7, as the tracking occurs, the laser beam spot moves on the detector 23 in the y-direction from a position indicated by a circle 9 to a position indicated by a circle $9_1$. Consequently, the output of the light receiving section 23a and the output of the light receiving section 23b are unbalanced despite the shape of the laser beam spot being circular, and thereby the objective lens 3 is shifted, which brings about a reverse correcting effect resulting in the incorrect adjustment of the objective lens.

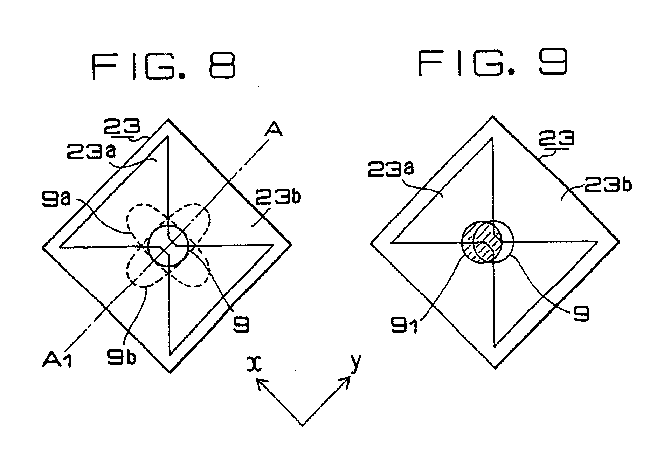

In order to control the movement of the objective lens to an extent which will not cause practical troubles through the control of such an incorrect adjustment of the objective lens to the least extent, a cylindrical lens 7 is disposed with its axis extending approximately at an angle of 45° to the information track of the optical disk and the light detector 23 is disposed, as shown in Fig. 8, with an axis of symmetry A-A₁ extended approximately at an angle of 45° to a direction along the information track. The positional relation between the laser beam spot and the light detector 23 is shown in Fig. 8.

Fig. 9 shows the positions of the laser beam spot on the light detector before and after tracking, when the light detector is disposed as shown in Fig. 8. An example of the application of the above-mentioned principle of performance to the four-section light detector 8 shown in Fig. 3 is disclosed in Japanese Patent Publication No. 53-37722.

In the light detectors 19 and 23 of Figs. 5 and 6 respectively, the division lines 21, 22, 27 and 28 are bent approximately at a right angle denoted as θ, however, the bending angles of those division lines are not necessarily be a right angle. Since the connecting parts 20 and 24 are formed on the light detectors 19 and 23 respectively, it is possible that the output of the light receiving section 19a and the output of the light receiving sections 19b and 19d, and the output of the light receiving section 23a and the output of the light receiving section 23b are not balanced. In such a case, it is possible to compensate the unbalance by designing the light detector so that the central bending angle θ is an angle greater than 90°.

In the second embodiment of this invention, there is described the improvement of the characteristics attained by inclining the central axis x of the cylinder lens and the symmetrical axis of the detector at an angle of 40° with regard to the information track, respectively. Of course, such effects can be obtained in the first and third embodiments by the same arrangement.

As described hereinbefore, according to the present invention, the light receiving surface of a light detector except the central portion thereof is divided into a plurality of light receiving sections which are arranged symmetrically with respect to a first axis extending in parallel to the axial direction of an optical element and to a second axis extending perpendicularly to the first axis, therefore, the loss of received light energy attributable to the presence of division lines forming a blind zone is reduced, and thereby an automatic focusing device of reduced zero-drifting and high stability is provided.

Furthermore, the present invention enhances the sensitivity of detecting the change of focus, improves the SN ratio of the information detecting circuit and the reliability, reduces the number of components and the manufacturing cost and prevents the deterioration of the dielectric strength of the light receiving sections.

## Claims

1.  An automatic focusing device comprising:
    an objective lens (3) for focusing a light beam (2) emitted by a light source (1) on a track of an information recording medium (4);
    a beam splitter (6) for separating a reflected light beam (5) reflected by the information recording medium (4) at a focal spot thereon and through the objective lens (3) from the light beam (2) emitted by the light source (1);
    an astigmatic optical system including an optical element (7) capable of causing astigmatic aberration of the separated reflected light beam (5);
    a light detector (19, 23) having a central light receiving section (19a, 19c; 23a) for information reading and a side light receiving surface adjacent to the central section and divided into a plurality of light receiving sections (19b, 19d; 23b) which are arranged symmetrically with respect to a first axis (X) extending in parallel to the axial direction of the optical element (7) and to a second axis (Y) extending perpendicularly to the first axis (X) and adapted to receive the reflected beam (5) transmitted through the optical element (7) and to give a light reception output signal corresponding to the shape of the spot (9) of the reflected light beam (5) formed on the light receiving surface;
    a focal position detecting circuit (10) capable of giving an output signal corresponding to the displacement of the objective lens (3) from the focused position, on the basis of the output signal given by the light detector (19, 23); and
    a lens driving circuit (16) which drives the objective lens (3) along the optical axis on the basis of the output signal given by the focal position detecting circuit (10),
    characterized in that the central light receiving section (19a, 19c; 23a) has a width in the second axis (Y) which is equal or slightly smaller than the diameter of the light spot when focused, and widens up to both sides in the direction of the first axis (X).

2. An automatic focusing device according to Claim 1, wherein said light detector is a three-section light detector (19) having a central light receiving section (19a, 19c) of a shape which is approximately symmetric with respect to the first (X) and the second axes (Y) and has a central constricted portion (20), and side light receiving sections (19b, 19d) formed approximately symmetrically with respect to the first (X) and the second axes (Y) and arranged with the apexes thereof opposed to each other.

3. An automatic focusing device according to Claim 2, wherein said focal position detecting circuit (10) has an adder (12) for adding the light reception output signals of the side light receiving sections (19b, 19d) of said light detector(19); and a differential amplifier (13) capable of giving an output signal corresponding to the difference between the light reception output signal of the central light receiving section (19a, 19c) and the output signal given by the adder (12).

4. An automatic focusing device according to Claim 2, characterized by an adder (12) for adding the light reception output signals of the side light receiving sections (19b, 19d) of said light detector (19) and an information detecting circuit (14) for adding the light reception output signal of the central light receiving section (19a, 19c) and the output signal of said adder (12).

5. An automatic focusing device according to Claim 1, wherein said light detector is a two-section light detector (23) having a central light receiving section (23a) of a shape which is approximately symmetric with respect to the first (X) and the second (Y) axes and has a central constricted portion (24) and an outer light receiving section (23b) surrounding the central light receiving section (23a).

6. An automatic focusing device according to Claim 5, wherein said focal position detecting circuit is provided with a differential amplifier (26) which gives a differential output signal corresponding to the difference between the light reception output signal given by the central light receiving section (23a) and the light reception output signal given by the outer light receiving section (23b).

7. An automatic focusing device according to Claim 2 or 5, wherein central bending angles ($\theta$) of division lines (21, 22; 27, 28) between the light receiving sections are right angles.

8. An automatic focusing device according to Claim 2 or 5, wherein central bending angles ($\theta$) of division lines (21, 22; 27,28) between the light receiving sections are obtuse angles.

9. An automatic focusing device according to Claim 1, wherein said optical element (7) is disposed with its axis extended approximately at an angle of 45° to the direction of the information track.

**Revendications**

1. Dispositif de focalisation automatique comprenant :
un objectif (3) pour focaliser un faisceau lumineux (2) émis par une source de lumière (1) sur une piste d'un support d'enregistrement d'informations (4) ;
un diviseur de faisceau (6) pour séparer du faisceau lumineux (2) émis par la source de lumière (1) un faisceau lumineux (5) réfléchi par le support d'enregistrement d'informations (4) au niveau d'un point focal sur celui-ci et à travers l'objectif (3) ;
un système optique astigmate comprenant un élément optique (7) apte à engendrer une aberration astigmate du faisceau lumineux réfléchi séparé (5) ;
un détecteur de lumière (19, 23) comportant une section centrale de réception de lumière (19a, 19c; 23a) pour une lecture d'informations et une surface latérale de réception de lumière adjacente à la section centrale et divisée en une pluralité de sections de réception de lumière (19b, 19d; 23b) qui sont disposées symétriquement par rapport à un premier axe (X) s'étendant parallèlement à la direction axiale de l'élément optique (7) et à un second axe (Y) s'étendant perpendiculairement au premier axe (X) et apte à recevoir le faisceau réfléchi (5) transmis à travers l'élément optique (7) et à fournir un signal de sortie de réception de lumière correspondant à la forme du point (9) du faisceau lumineux réfléchi (5) formé sur la surface de réception de lumière ;
un circuit de détection de position focale (10) apte à fournir un signal de sortie correspondant au déplacement de l'objectif (3) à partir de la position focalisée, sur la base du signal de sortie fourni par le détecteur de lumière (19, 23) ; et un circuit d'entraînement d'objectif (16) qui entraîne l'objectif (3) le long de l'axe optique sur la base du signal de sortie fourni par le circuit de détection de position focale (10),

caractérisé en ce que la section centrale de réception de lumière (19a, 19c; 23a) présente une largeur dans le second axe (Y) qui est égale ou légèrement inférieure amètre du point lumineux lorsqu'il est focalisé, et va en s'élargissant vers les deux côtés dans la direction du premier axe (X).

2. Dispositif de focalisation automatique selon la revendication 1, dans lequel ledit détecteur de lumière est un détecteur de lumière (19) à trois sections comportant une section centrale de réception de lumière (19a, 19c) présentant une forme qui est approximativement symétrique par rapport aux premier (X) et second (Y) axes et comporte une partie centrale rétrécie (20), et des sections latérales de réception de lumière (19b, 19d) formées approximativement symétriquement par rapport aux premier (X) et second (Y) axes et disposées de façon que leurs sommets soient en regard l'un de l'autre.

3. Dispositif de focalisation automatique selon la revendication 2, dans lequel ledit circuit de détection de position focale (10) comporte un additionneur (12) pour additionner les signaux de sortie de réception de lumière des sections latérales de réception de lumière (19b, 19d) dudit détecteur de lumière (19) ; et un amplificateur différentiel (13) apte à fournir un signal de sortie correspondant à la différence entre le signal de sortie de réception de lumière de la section centrale de réception de lumière (19a, 19c) et le signal de sortie fourni par l'additionneur (12).

4. Dispositif de focalisation automatique selon la revendication 2, caractérisé par un additionneur (12) pour additionner les signaux de sortie de réception de lumière des sections latérales de réception de lumière (19b, 19d) dudit détecteur de lumière (19) et un circuit de détection d'informations (14) pour additionner le signal de sortie de réception de lumière de la section centrale de réception de lumière (19a, 19c) et le signal de sortie dudit additionneur (12).

5. Dispositif de focalisation automatique selon la revendication 1, dans lequel ledit détecteur de lumière est un détecteur de lumière (23) à deux sections, comportant une section centrale de réception de lumière (23a) présentant une forme qui est approximativement symétrique par rapport aux premier (X) et second (Y) axes et comporte une partie centrale rétrécie (24) et une section externe de réception de lumière (23b) entourant la section centrale de réception de lumière (23a) ;

6. Dispositif de focalisation automatique selon la revendication 5, dans lequel ledit circuit de détection de position focale est doté d'un amplificateur différentiel (26) qui fournit un signal de sortie différentiel correspondant à la différence entre le signal de sortie de réception de lumière fourni par la section centrale de réception de lumière (23a) et le signal de sortie de réception de lumière fourni par la section externe de réception de lumière (23b).

7. Dispositif de focalisation automatique selon la revendication 2 ou 5, dans lequel des angles de courbure centrale (θ) de lignes de division (21, 22; 27, 28) entre les sections de réception de lumière sont des angles droits.

8. Dispositif de focalisation automatique selon la revendication 2 ou 5, dans lequel des angles de courbure centrale (θ) de lignes de division (21, 22 ; 27, 28) entre les sections de réception de lumière sont des angles obtus.

9. Dispotif de focalisation automatique selon la revendication 1, dans lequel ledit élément optique (7) est disposé de façon que son axe s'étende approximativement suivant un angle de 45° par rapport à la direction de la piste d'informations.

**Ansprüche**

1. Automatische Fokussiervorrichtung,
mit einer Objektivlinse (3) zum Fokussieren eines Lichtstrahles (2), welcher durch eine Lichtquelle (1) auf einer Spur eines Informationsaufzeichnungsmediums (4) abgestrahlt wird;
mit einem Strahlenverteiler (6) zum Separieren eines reflektierten Lichtstrahles (5), welcher durch das Informationsaufzeichnungsmedium (4) in einem Brennpunkt durch die Objektivlinse (3) aus dem von der Lichtquelle (1) ausgesandten Lichtstrahl (2) reflektiert wird;
mit einem astigmatischen optischen System, welches ein optisches Element (7) enthält, das in der Lage ist, eine astigmatische Abweichung des separierten, reflektierten Lichtstrahles (5) zu verursachen;
mit einem Lichtdetektor (19, 23), der eine zentrale Licht-Einfall-Sektion (19a, 19c, 23a) zum Lesen von Informationen und eine seitliche Licht-Einfalls-Oberfläche neben der zentralen Sektion aufweist, welche in eine Mehrzahl von Licht-Einfall-Sektionen (19b, 19d, 23b) geteilt ist, die symmetrisch angeordnet sind zu einer ersten Achse (X), welche parallel zur axialen Richtung des optischen Elementes (7) verläuft, und zu einer zweiten Achse (Y), welche senkrecht zu der ersten Achse (X) verläuft, wobei die seitlichen Licht-Einfall-Sektionen (19b, 19d, 23b) derart ausgebildet sind, daß sie den reflektierten Lichtstrahl (5), welcher durch das optische Element (7) übertragen wird, empfangen und ein Licht-Empfangs-Ausgangssignal abgeben, das der Form des Lichtpunktes (9) entspricht, den der reflektierte Lichtstrahl (5) auf der Licht-Einfalls-Oberfläche bildet; mit einer Schaltung zur Erfassung der Fokusposition (10), welche auf der Basis des Ausgangssignals des Lichtdetektors (19, 23) ein Ausgangssignal abgeben kann, das der Verschiebung der Objektivlinse (3) aus der Fokussierungsposition entspricht; und mit einer Schaltung zum Antrieb der Linse (16), welche die Objektivlinse (3) entlang der optischen Achse auf der Basis des Ausgangssignales der Schaltung zur Erfassung der Fokusposition (10) bewegt; dadurch gekennzeichnet, daß die zentrale Licht-Einfalls-Sektion (19a, 19c, 23a) eine Breite im Verlauf der zweiten Achse (Y) aufweist, welche gleich ist oder geringfügig schmaler als der Durchmesser des fokussierten Lichtpunktes und die sich in Richtung der ersten Achse (X) zu beiden Seiten verbreitert.

2. Automatische Fokussiervorrichtung nach Anspruch 1, dadurch gekennzeichnet, daß der Lichtdetektor ein Drei-Sektions-Lichtdetektor (19) ist, der eine zentrale Licht-Einfalls-Sektion (19a, 19c) aufweist, deren Form zu der ersten Achse (X) und zu der zweiten Achse (Y) annähernd symmetrisch ist und der einen zentralen, verengten Abschnitt (20) sowie seitliche Licht-Einfalls-Sektionen (19b, 19d) aufweist, welche annähernd symmetrisch zu der ersten Achse (X) und zu der zweiten Achse (Y) ausgebildet sind und derart angeordnet sind, daß sich ihre Scheitel gegenüberliegen.

3. Automatische Fokussiervorrichtung nach Anspruch 2, dadurch gekennzeichnet, daß die Schaltung zur Erfassung der Fokusposition (10) einen Addierer (12) aufweist, der die Licht-Empfangs-Ausgangssignale der seitlichen Licht-Einfalls-Sektionen (19b, 19d) des Lichtdetektors (19) addiert, und daß ein Differenzverstärker (13) vorhanden ist, der ein Ausgangssignal abgeben kann, das der Differenz zwischen dem Licht-Empfangs-Ausgangssignal der zentralen Licht-Einfalls-Sektion (19a, 19c) und dem Ausgangssginal des Addierers entspricht.

4. Automatische Fokussiervorrichtung nach Anspruch 2, dadurch gekennzeichnet, daß ein Addierer (12) zum Addieren des Licht-Empfangs-Ausgangssignals der seitlichen Licht-Einfalls-Sektionen (19b, 19d) des Lichtdetektors (19) vorhanden ist und daß eine Informations-Erfassungsschaltung (14) vorhanden ist, die das Licht-Empfangs-Ausgangssignal der zentralen Licht-Einfalls-Sektion (19a, 19c) und das Ausgangssignal des Addierers (12) addiert.

5. Automatische Fokussiervorrichtung nach Anspruch 1, dadurch gekennzeichnet, daß der Lichtdetektor ein Zwei-Sektions-Lichtdetektor (23) ist, mit einer zentralen Licht-Einfalls-Sektion (23a), deren Form annähernd symmetrisch zu der ersten Achse (X) und der zweiten Achse (Y) ist, und mit einem zentralen, verengten Abschnitt (24) und einer äußeren Licht-Einfalls-Sektion (23d), welche die zentrale Licht-Einfalls-Sektion (23a) umgibt.

6. Automatische Fokussiervorrichtung nach Anspruch 5, dadurch gekennzeichnet, daß die Schaltung zur Erfassung der Fokusposition mit einem Differenzverstärker (26) ausgestattet ist, der ein Differenz-Ausgangssignal abgibt, welches der Differenz des von der zentralen Licht-Einfalls-Sektion (23a) abgegebenen Licht-Empfangs-Ausgangssignal und dem von der äußeren Licht-Einfalls-Sektion (23b) abgegebenen Licht-Empfangs-Ausgangssignal entspricht.

7. Automatische Fokussiervorrichtung nach Anspruch 2 oder 5, dadurch gekennzeichnet, daß die zentralen Biegewinkel ($\theta$) der Trennlinien (21, 22, 27, 28) zwischen den Licht-Einfalls-Sektionen rechte Winkel sind.

8. Automatische Fokussiervorrichtung nach Anspruch 2 oder 5, dadurch gekennzeichnet, daß die zentralen Biegewinkel ($\theta$) der Trennlinien (21, 22, 27, 28) zwischen den Licht-Einfalls-Sektionen stumpfe Winkel sind.

9. Automatische Fokussiervorrichtung nach Anspruch 1,
dadurch gekennzeichnet, daß das optische Element (7) so angeordnet ist, daß seine Achsen annähernd in einem Winkel von 45° zur Richtung der Informationsspur verlaufen.

# FIG. 1

# FIG. 2

# FIG. 3

LENS
DRIVING
CIRCUIT

# FIG. 4(A)

# FIG. 4(B)

# FIG. 5

# FIG. 6

LENS DRIVING CIRCUIT

# FIG. 7

# FIG. 8

# FIG. 9